# EUROPÄISCHE PATENTSCHRIFT

(11) **EP 1 786 743 B1**
(45) Veröffentlichungstag und Bekanntmachung des Hinweises auf die Patenterteilung: **03.02.2010**
(21) Anmeldenummer: 05776640.4
(22) Anmeldetag: 11.08.2005
(51) Int. Cl.: C04B 7/44, F23G 5/32

(54) **VERFAHREN UND VORRICHTUNG ZUM VERASCHEN VON BRENNSTOFF**
METHOD AND DEVICE FOR INCINERATING COMBUSTIBLE MATERIAL
PROCEDE ET DISPOSITIF POUR INCINERER DES MATIERES COMBUSTIBLES

(30) Priorität: 14.09.2004 DE 102004044447; 20.09.2004 DE 102004045510
(43) Veröffentlichungstag der Anmeldung: 23.05.2007
(73) Patentinhaber: Polysius AG, 59269 Beckum (DE)
(72) Erfinder: KÄSTINGSCHÄFER, Gerhard, 59329 Wadersloh (DE); RUOSS, Frank, 46286 Dorsten (DE)
(74) Vertreter: Tetzner, Michael
(86) Internationale Anmeldenummer: PCT/EP2005/008764
(87) Internationale Veröffentlichungsnummer: WO 2006/029679

(56) Entgegenhaltungen:
- EP-A- 1 091 172
- DE-A1- 3 839 381

## Beschreibung

Die Erfindung betrifft ein Verfahren sowie eine Vorrichtung zum Veraschen von Brennstoff in Form von brennbarem, insbesondere stückigem Abfall, bei der Zementherstellung, wobei der Brennstoff in eine Brennkammer eingeführt und unter Zugabe wenigstens eines ersten Luftstroms verbrannt wird.

Separate Brennkammern für Abfallbrennstoffe sind in Kombination mit Calcinatoren in Zementwerken bekannt. Derartige Brennkammern haben bewegliche Bauelemente zum Transportieren der Brennstoffe während der Veraschung und zum Austragen der Verbrennungsrückstände.

Bei einer anderen Form der Brennkammer werden die Verbrennungsrückstände zusammen mit dem Gasstrom über eine Austragsschurre in den Calcinator ausgetragen. Diese Brennkammern sind jedoch für stückige Abfallbrennstoffe weitgehend ungeeignet, da die teilweise unverbrannten stückigen Brennstoffe auf der Austragsschurre liegen bleiben können und dann zu Verstopfungen führen.

In der EP-B-0 582 394 bildet der Boden der Brennkammer eine Art Wirbelbett, wobei die Rückstände zusammen mit den Gasstrom nach oben ausgetragen werden. Die Problematik dieser Brennkammer besteht darin, dass nicht flugfähige Rückstände auf dem Boden liegen bleiben und die Wirkungsweise der Brennkammer einschränken.

In der DE-A1-38 39 381 erfolgt die Entaschung aus der Verbrennungskammer mittels Arbeitsluft von 5 bis 10 bar, welche die Asche mit kurzen Luftstößen zu Ascheaustragsöffnungen ausschiebt.

Der Erfindung liegt daher die Aufgabe zugrunde, ein Verfahren sowie eine Vorrichtung zum Veraschen von Brennstoff anzugeben, wobei auch bei statischen Boden, Mittel zum Aufgeben des Brennstoffs und Mittel zum Zuführen wenigstens eines ersten Luftstroms vorsieht. Im Bereich des Bodens sind außerdem Mittel zum Zuführen wenigstens eines zweiten Luftstroms in Form von Druckluftstößen vorgesehen. problematischen, stückigen Brennstoffen ein zuverlässiger Betrieb gewährleistet wird.

Erfindungsgemäß wird diese Aufgabe durch die Merkmale der Ansprüche 1, 11 und 13 gelöst.

Weitere Ausgestaltungen der Erfindung sind der Gegenstand der Unteransprüche.

Beim erfindungsgemäßen Verfahren zum Veraschen von Brennstoff in Form von brennbarem, insbesondere stückigem Abfall bei der Zementherstellung wird der Brennstoff in eine Brennkammer eingeführt und unter Zugabe wenigstens eines ersten Luftstroms verbrannt. Im Bereich des Bodens der Brennkammer wird wenigstens ein zweiter Luftstrom in Form von Druckluftstößen zugeführt, so dass die am Boden befindlichen Rückstände oder Restbrennstoffe durch den zweiten Luftstrom bewegt werden und mit dem wenigstens einen ersten Luftstrom in Wirkkontakt kommen.

Ein Teil des Brennstoffs (nämlich die flugfähigen Bestandteile) wird nach Aufgabe in die Brennkammer vom ersten Luftstrom erfasst und verbrannt. Die nicht flugfähigen Brennstoffe sind die Brennstoffe, die unverbrannt oder teilweise verbrannt auf den Boden der Brennkammer fallen. Dort werden diese Rückstände oder Restbrennstoffe durch den zweiten Luftstrom erneut angehoben und durch das Einstreuen in den ersten Luftstrom weiter verbrannt, bis sie mit diesem aus der Brennkammer ausgetragen werden. Diejenigen Bestandteile, die nicht brennbar sind bzw. zu schwer sind, um von dem ersten Luftstrom pneumatisch ausgetragen zu werden, können mit Hilfe des in Form von Druckluftstößen zugeführten zweiten Luftstroms zum Ausgang der Brennkammer transportiert werden.

Die erfindungsgemäße Vorrichtung zum Veraschen von Brennstoff in Form von brennbaren Abfall bei der Zementherstellung weist eine Brennkammer auf, die einen Gemäß einer bevorzugten Ausführung wird diese Vorrichtung zum Veraschen von Brennstoff in einer Anlage zur Zementherstellung umfassend einen Vorwärmer, einen Vorcalcinator und einen Drehrohrofen integriert.

Weitere Ausgestaltungen und Vorteile der Erfindung werden anhand der Beschreibung einiger Ausführungsbeispiele und der Zeichnung näher erläutert.

In der Zeichnung zeigen
- Fig. 1: eine schematische Ansicht einer Anlage zur Zementherstellung,
- Fig. 2: eine schematische Seitenansicht der Brennkammer zur Veranschaulichung einer ersten Betriebssituation,

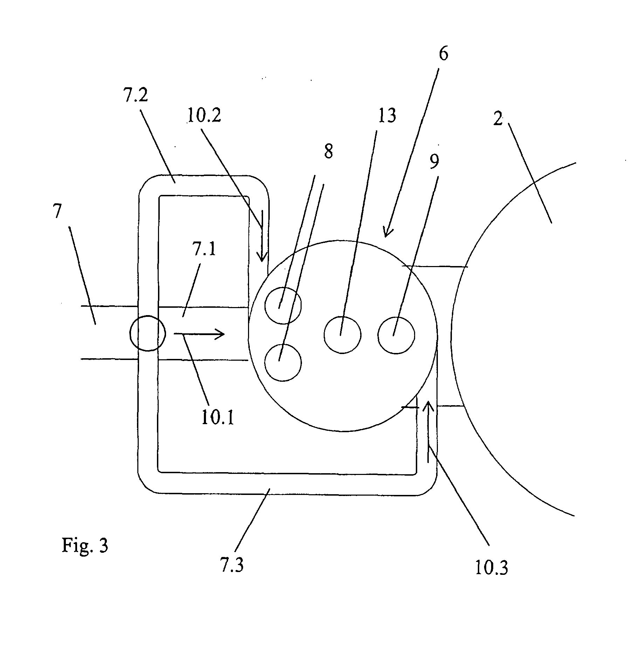

- Fig. 3: eine schematische Draufsicht der Vorrichtung gemäß der Fig. 2,
- Fig. 4: eine schematische Draufsicht des Bodens der Brennkammer,
- Fig. 5: eine schematische Seitenansicht der Brennkammer zur Veranschaulichung einer zweiten Betriebssituation und
- Fig. 6: eine schematische Seitenansicht im Bereich des Bodens der Brennkammer gemäß einer zweiten Variante.

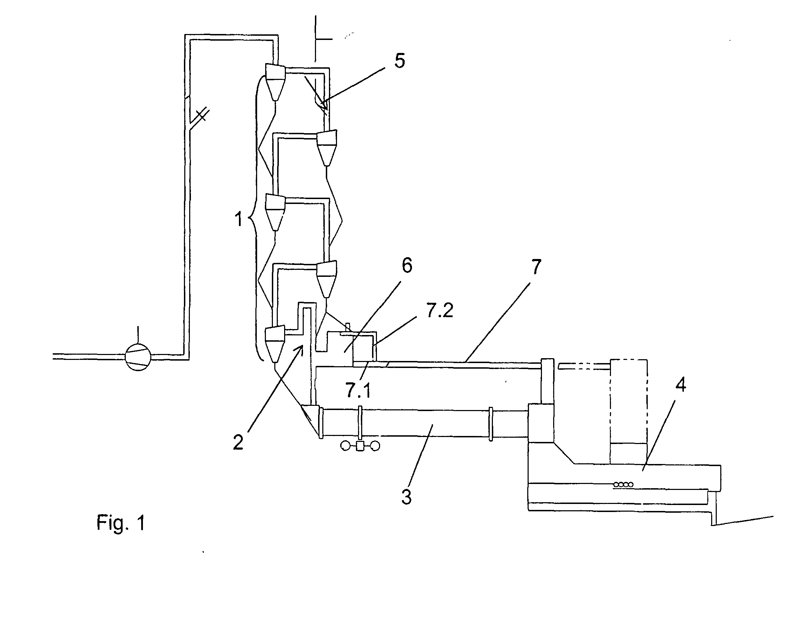

Die in Fig. 1 dargestellte Anlage zur Zementherstellung besteht im wesentlichen aus einem Vorwärmer 1, einem Calcinator 2, einem Drehrohrofen 3 und einem Kühler 4.

Das Zementrohmehl wird bei einer Aufgabestelle 5 dem Vorwärmer 1 zugeführt, wird dann in den einzelnen Stufen des Vorwärmers vorgewärmt, gelangt anschließend zur Vorcalcination in den Calcinator 2 und wird dann im Drehrohrofen zu Zementklinker gebrannt, der anschließend im Kühler 4 abgekühlt wird.

Der Calcinator 2 umfasst eine separate Brennkammer 6 zum Veraschen von Brennstoff in Form von brennbarem Abfall. Für die Verbrennung des Brennstoffs kann Frischluft, Abluft oder vorzugsweise Tertiärluft des Kühlers verwendet werden, die im vorliegenden Fall über eine Tertiärluftleitung 7 zugeführt wird.

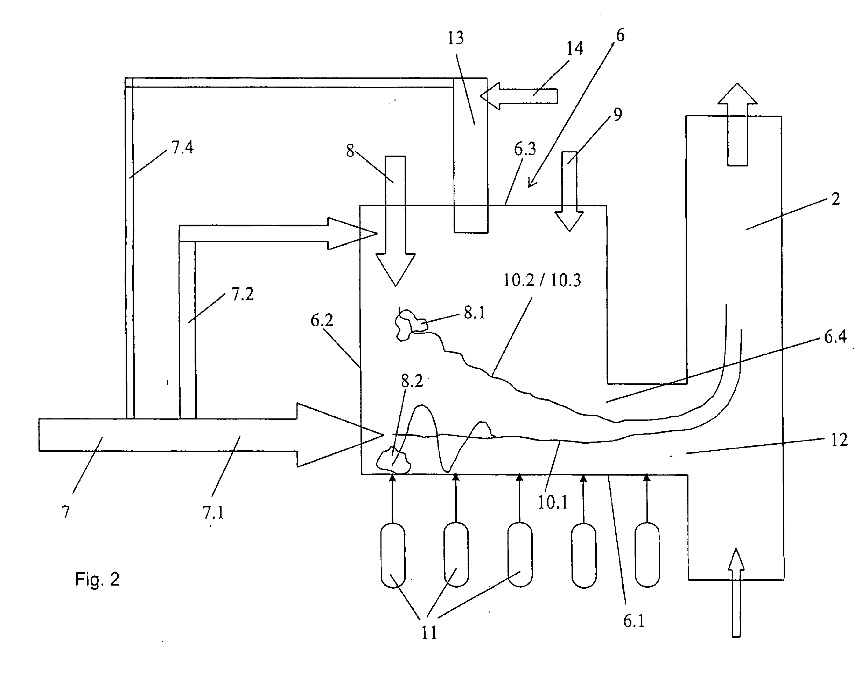

Die in Fig. 2 näher dargestellte Brennkammer 6 weist einen Boden 6.1, Seitenwände 6.2 und eine Decke 6.3 auf. Im Bereich des Bodens 6.1 steht die Brennkammer 6 über einen Ausgang 6.4 und eine Verbindungsleitung 12 mit dem Calcinator 2 in Verbindung.

Weiterhin ist die Brennkammer 6 mit Mitteln 8 zum Aufgeben von Brennstoff und Mitteln 9 zum Aufgeben von Rohmehl versehen. Weiterhin wird ein erster Luftstrom über die Tertiärluftleitung 7 zugeführt, die sich im dargestellten Ausführungsbeispiel in drei Leitungsabschnitte 7.1-7.3 verzweigt. So wird über den Leitungsabschnitt 7.1 1 ein erster Teilstrom 10.1 im unteren Bereich der Brennkammer 6 zugeführt. Der zweite und dritte Teilstrom werden über die Leitungsabschnitte 7.2 und 7.3 im oberen Bereich der Brennkammer eingeführt.

Wenngleich das Rohmehl im dargestellten Ausführungsbeispiel über die Decke 6.3 aufgegeben wird, wäre es im Rahmen der Erfindung auch denkbar, dass das Rohmehl beispielsweise zusammen mit dem zweiten und dritten Teilstrom 10.2, 10.3 in die Brennkammer eingeführt wird.

Die beiden Leitungsabschnitte 7.2 und 7.3 sind in etwa tangential an die zylindrisch ausgebildete Brennkammer 6 angeschlossen. Der Leitungsabschnitt 7.1 mündet derart in der Brennkammer 6, dass der erste Teilstrom 10.1 im wesentlichen parallel zum Boden 6.1 in Richtung des Ausgangs 6.4 gerichtet ist.

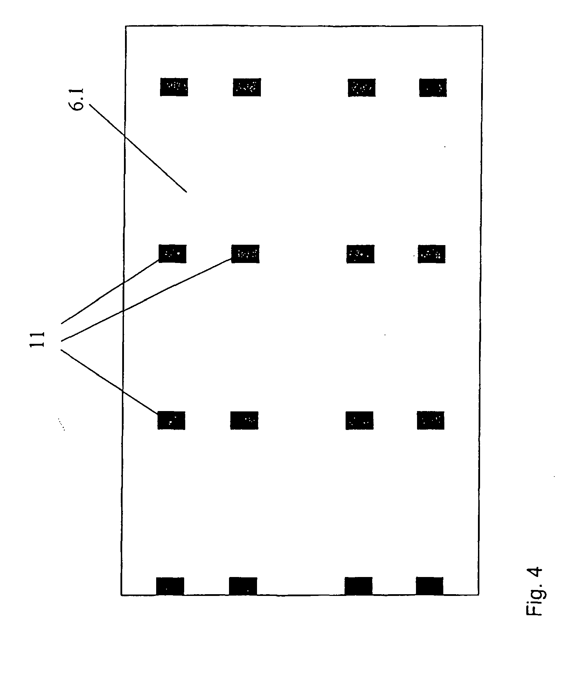

Im Bereich des Bodens 6.1 der Brennkammer sind Mittel 11 zum Zuführen des zweiten Luftstroms in Form von Druckluftstößen 11.1 vorgesehen. Gemäß der Draufsicht in Fig. 4 zu dem dargestellten Ausführungsbeispiel 16 Zuführstellen über den Boden 6.1 verteilt angeordnet.

In der Decke der Brennkammer kann optional ein Brenner 13 zum Verbrennen von pulverförmigen, flüssigen und/oder gasförmigen Brennstoffen 14, wie Gas, Öl und/oder Kohle vorgesehen werden (siehe Fig.2). Für die Zündung, Flammenformung und zumindest einer Teilverbrennung kann (darauf kann auch je nach Brennstoffen verzichtet werden) die erforderliche Luft über einen Leitungsabschnitt 7.4 zugeführt werden. Die vollständige Verbrennung der über den Brenner zugeführten Brennstoffe erfolgt durch die anderen Luft- und Gasströme (Ofenabgas) in der Brennkammer und dem Calcinator.

Der Brenner 13 kann insbesondere aus folgenden Gründen eingesetzt werden:
1. Die Brennkammer wird nur mit dem Brenner 13 betrieben, wenn ausschließlich pulverförmige und flüssige Brennstoffe und Gas als Brennstoff eingesetzt werden. Dabei ist es unwichtig, ob es sich um Regelbrennstoffe oder minderwertige bzw. Primär- und Sekundarbrennstoffe handelt.
2. Der Brenner 13 wird betrieben, um die Brennkammer auf Betriebstemperatur für die Aufgabe von brennbarem Abfall zu bringen, z.B. beim Anfahren der Ofenlinie, wenn die Temperatur der Tertiärluft (Temperatur der Brennkammer) zu Beginn der Aufgabe der Abfallbrennstoffe für die Zündung und Verbrennung der momentan eingesetzten Abfallbrennstoffe nicht ausreichend ist.
3. Der Brenner 13 wird parallel betrieben, wenn der thermische Energieeintrag in den Calcinator durch die Abfallbrennstoffe allein nicht ausreichend ist, oder um den Verbrennungsprozess aufrecht zu erhalten (Stützfeuerung für schwer brennbare Abfälle) oder um pulverförmige und flüssige Abfallbrennstoffe und minderwertiges Gas mit den stückförmigen Brennstoffen gleichzeitig einzusetzen.

Anhand von Fig. 2 wird im folgenden die Betriebsweise der Brennkammer näher erläutert:
Die vom Kühler kommende Tertiärluft wird in drei Teilströme 10.1, 10.2 und 10.3 aufgeteilt und der Brennkammer zugeführt. Durch die beiden oben zugeführten Teilströme 10.2 und 10.3 erfolgt eine thermische Sichtung des im Bereich der Decke aufgegebenen Brennstoffs in flugfähige Brennstoffe 8.1 und nicht flugfähige Brennstoffe 8.2. Als flugfähig werden die Brennstoffe, die beim Fallen verbrannt bzw. pneumatisch mit dem Luftstrom in den Calcinator 2 transportiert werden. Nicht flugfähige Brennstoffe werden die Brennstoffe bezeichnet, die unverbrannt oder nur teilweise verbrannt auf den statischen Boden 6.1 der Brennkammer 6 fallen. Der etwa parallel zum Boden 6.1. zugeführte erste Teilstrom 10.1 dient zum Verbrennen der nicht flugfähigen Brennstoffe 8.2. Ermöglicht wird die Verbrennung dieses Brennstoffs 8.2 und der Austrag von Asche und nicht brennbaren Reststoffe in den Calcinator 2 durch das wiederholte Einstreuen des Brennstoffs 8.2 mittels der Druckluftstöße im Bereich des Bodens 6.1. Durch die gezielte Aktivierung der Druckluftstöße wird der Brennstoff 8.2 angehoben und in den oder durch den Teilstrom 10.1 geblasen. Dadurch findet eine weitere Verbrennung dieser Brennstoffe statt, wobei der Brennstoff wiederholte Male auf den Boden gelangt und erneut durch die Druckluftstöße angehoben wird, bis er soweit verbrannt ist, dass er mit dem mit einen der Teilluftströme 10.1-10.3 mit in den Calcinator 2 ausgetragen wird.

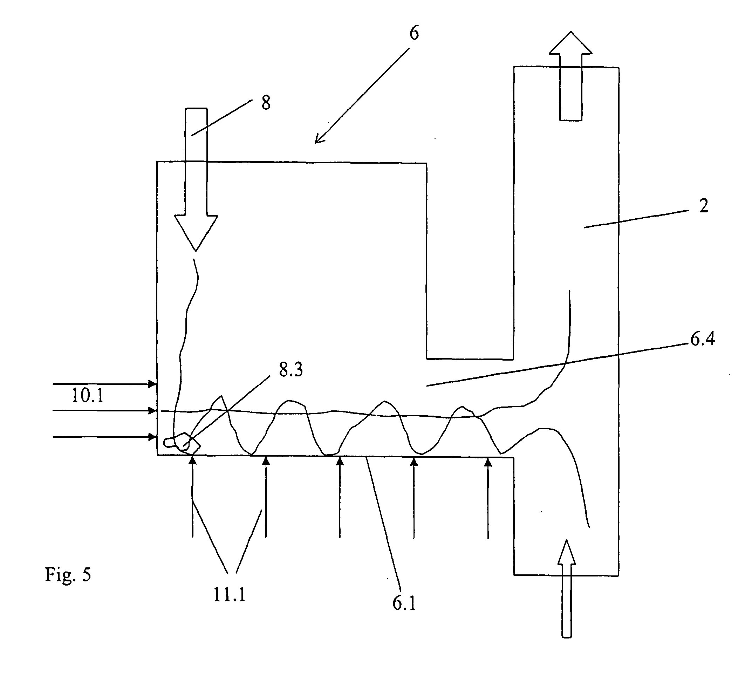

In Fig. 5 ist eine Betriebssituation dargestellt, bei der ein nicht flugfähiger und unbrennbarer Brennstoff 8.3 auf dem Boden 6.1 zu liegen kommt und dort über die Druckluftstöße immer wieder angehoben und in Richtung Ausgang 6.4 gefördert wird. Die dargestellte Brennkammer wird zu dem nur mit dem ersten Teilstrom 10.1 betrieben.

Durch die optionale Zugabe von Rohmehl kann die Temperatur in der Brennkammer 6 limitiert und damit die Bauelemente der Brennkammer 6 vor Überhitzung geschützt werden. Die Temperatursenkung erfolgt dabei durch die Teilcalcinierung des eingeführten Rohmehls.

Die Druckluftstöße sind parallel zum ersten Luftstrom oder vorzugsweise so gerichtet, dass sie den ersten Luftstrom kreuzen. Während der erste Luftstrom (Teilströme 10.1-10.3) kontinuierlich zugeführt wird, erfolgen die Druckluftstöße des zweiten Luftstroms in einstellbaren Zeitintervallen, wobei die Vielzahl der Zuführstellen 11 gleichzeitig oder in Gruppen aktiviert werden können. Durch die Art und Weise des Einstreuens der nicht flugfähigen Brennstoffe 8.2 (Impuls der Druckluft, Frequenz der Druckluftstöße, Schaltung der Zuführstellen) wird die Intensität (Geschwindigkeit der Verbrennung und damit die Verweilzeit des Brennstoff in der Brennkammer bestimmt. Indem die Geschwindigkeit des ersten Luftstroms, die Frequenz der Aktivierung des zweiten Luftstroms und die Impulsstärke der Druckluftstöße eingestellt werden können, kann die Verbrennung gezielt auf den jeweiligen Brennstoff abgestimmt werden.

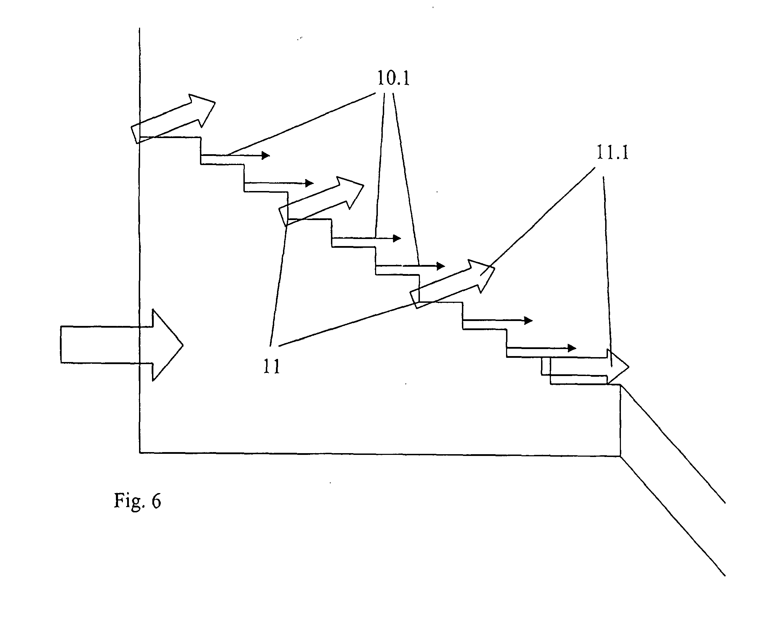

Der statische Boden 6.1 kann horizontal oder auch geneigt sein, weiterhin kann er eben oder in Fig. 6 gezeigt, treppenförmig ausgebildet sein. Bei der treppenförmigen Ausbildung des Bodens gemäß Fig. 6 wird der erste Teilstrom 10.1 an mehreren Stellen zugeführt auch sind bei dieser Ausführung mehrere über den Boden verteilte Zuführstellen 11 für die Druckluftstöße 11.1 vorgesehen.

Bei der oben beschriebenen Brennkammer kann auf mechanische Förderelemente völlig verzichtet werden. Durch das Vorsehen der Druckluftstöße können jedoch dennoch unverbrannte Reststoffe zuverlässig aus der Brennkammer entfernt werden.

## Patentansprüche

1. Verfahren zum Veraschen von Brennstoff in Form von brennbarem Abfall bei der Zementherstellung, wobei der Brennstoff in eine Brennkammer (6) eingeführt und unter Zugabe wenigstens eines ersten Luftstroms (10.1) verbrannt wird, wobei im Bereich des Bodens (6.1) der Brennkammer wenigstens ein zweiter Luftstrom (11.1) in Form von Druckluftstößen derart zugeführt wird, dass die am Boden befindlichen Rückstände oder Restbrennstoffe mittels des zweiten Luftstroms bewegt werden,
**dadurch gekennzeichnet, dass** am Boden befindlicher Brennstoff (8.2) durch die gezielte Aktivierung des zweiten Luftstroms angehoben und in den oder durch den ersten Luftstrom (10.1) geblasen wird und so mit dem ersten Luftstrom (10.1) zum Zwecke der Verbrennung in Wirkkontakt kommt.

2. Verfahren nach Anspruch 1, **dadurch gekennzeichnet, dass** zumindest ein erster Teilstrom (10.1) des ersten Luftstroms im wesentlichen parallel zum Boden ausgerichtet ist.

3. Verfahren nach Anspruch 1, **dadurch gekennzeichnet, dass** der erste Luftstrom (10.1) kontinuierlich und der zweite Luftstrom (11.1) zeitweise wirkt.

4. Verfahren nach Anspruch 1, **dadurch gekennzeichnet, dass** der zweite Luftstrom (11.1) in einstellbaren Zeitintervallen ausgelöst werden.

5. Verfahren nach Anspruch 1, **dadurch gekennzeichnet, dass** der Boden eine Vielzahl von Zuführstellen (11) für den zweiten Luftstrom aufweist, wobei die Zuführstellen gleichzeitig oder in Gruppen aktiviert werden.

6. Verfahren nach Anspruch 1, **dadurch gekennzeichnet, dass** die Geschwindigkeit des ersten Luftstroms (10.1) und/oder die Frequenz der Aktivierung des zweiten Luftstroms (11.1) einstellbar ist.

7. Verfahren nach Anspruch 1, **dadurch gekennzeichnet, dass** der Brennkammer (6) Zementrohmehl aufgegeben wird.

8. Verfahren nach Anspruch 1, **dadurch gekennzeichnet, dass** der erste und der zweite Luftstrom so ausgerichtet sind, dass sie parallel zueinander verlaufen oder vorzugsweise sich kreuzen.

9. Verfahren nach Anspruch 1, **dadurch gekennzeichnet, dass** der erste Luftstrom in wenigstens einem ersten Teilstrom (10.1) im unteren Bereich der Brennkammer und in wenigstens einem zweiten Teilstrom (10.2, 10.3) im oberen Bereich der Brennkammer (6) zugeführt wird.

10. Verfahren nach Anspruch 1, **dadurch gekennzeichnet, dass** der erste Luftstrom in wenigstens einem ersten Teilstrom (10.1) im unteren Bereich der Brennkammer und in wenigstens einem zweiten Teilstrom (10.2, 10.3) im oberen Bereich der Brennkammer zugeführt wird und der erste Teilstrom den zugeführten Brennstoff in flugfähigen und nicht flugfähigen Brennstoff trennt, wobei der flugfähige Brennstoff im ersten Teilstrom verbrannt und aus der Brennkammer ausgetragen wird, während der nicht flugfähige Brennstoff auf den Boden (6.1) fällt und dort von dem zweiten Luftstrom angehoben und mit dem zweiten Teilstrom des ersten Luftstroms in Wirkkontakt gebracht wird.

11. Vorrichtung zur Durchführung des Verfahrens nach einem oder mehreren der vorhergehenden Ansprüche mit einer Brennkammer (6), enthaltend einen statischen Boden (6.1), Mittel (8) zum Aufgeben des Brennstoffs und Mittel (7.1) zum Zuführen wenigstens eines ersten Luftstroms, **dadurch gekennzeichnet, dass** im Bereich des Bodens (6.1) Mittel (11) zum Zuführen wenigstens eines zweiten Luftstroms in Form von Druckluftstößen vorgesehen sind.

12. Vorrichtung nach Anspruch 11, **dadurch gekennzeichnet, dass** die Mittel zum Zuführen des zweiten Luftstroms eine Vielzahl von über den Boden (6.1) verteilten Zuführstellen (11) aufweist.

13. Anlage zur Zementherstellung mit einem Vorwärmer (1), einen Calcinator (2) und einem Drehrohrofen (3), wobei der Calcinator (2) eine Vorrichtung gemäß einem der Ansprüche 11 oder 12 umfasst.

## Claims

1. Method for incinerating combustion material in the form of combustible waste during cement production, the combustion material being introduced into a combustion chamber (6) and being burned with the addition of at least a first air flow (10.1),
with, in the region of the floor (6.1) of the combustion chamber, at least a second air flow (11.1) being supplied in the form of compressed air pulses in such a manner that the residues or remaining combustion materials which are located on the floor are moved by means of the second air flow, **characterised in that** combustion material (8.2) on the floor is lifted by the second air flow being selectively activated and is blown into or by the first air flow (10.1) and thereby comes into operational contact with the first air flow (10.1) for the purpose of combustion.

2. Method according to claim 1, **characterised in that** at least a first part flow (10.1) of the first air flow is directed substantially parallel with the floor.

3. Method according to claim 1, **characterised in that** the first air flow (10.1) functions continuously and the second air flow (11.1) functions intermittently.

4. Method according to claim 1, **characterised in that** the second air flow (11.1) is activated in adjustable time intervals.

5. Method according to claim 1, **characterised in that** the floor has a plurality of supply locations (11) for the second air flow, the supply locations being activated simultaneously or in groups.

6. Method according to claim 1, **characterised in that** the speed of the first air flow (10.1) and/or the frequency of the activation of the second air flow (11.1) can be adjusted.

7. Method according to claim 1, **characterised in that** cement raw meal is fed into the combustion chamber (6).

8. Method according to claim 1, **characterised in that** the first and the second air flow are directed in such a manner that they extend parallel with each other or preferably intersect.

9. Method according to claim 1, **characterised in that** the first air flow is supplied in at least a first part flow (10.1) in the lower region of the combustion chamber and in at least a second part flow (10.2, 10.3) in the upper region of the combustion chamber (6).

10. Method according to claim 1, **characterised in that** the first air flow is supplied in at least a first part flow (10.1) in the lower region of the combustion chamber and in at least a second part flow (10.2, 10.3) in the upper region of the combustion chamber and the first part flow separates the supplied combustion material into dispersible and non-dispersible combustion material, the dispersible combustion material in the first part flow burning and being discharged from the combustion chamber, whilst the non-dispersible combustion material falls onto the floor (6.1) and is lifted at that location by the second air flow and is brought into operational contact with the second part flow of the first air flow.

11. Device for carrying out the method according to one or more of the preceding claims, with a combustion chamber (6), comprising a static floor (6.1), means (8) for feeding the combustion material and means (7.1) for supplying at least a first air flow,
**characterised in that**, in the region of the floor (6.1), means (11) are provided for supplying at least a second air flow in the form of compressed air pulses.

12. Device according to claim 11, **characterised in that** the means for supplying the second air flow have a plurality of supply locations (11) which are distributed over the floor (6.1).

13. Installation for cement production having a prewarmer (1), a calcinator (2) and a rotary tubular furnace (3), the calcinator (2) comprising a device according to either claim 11 or claim 12.

## Revendications

1. Procédé pour incinérer des matières combustibles sous la forme de déchets combustibles dans la fabrication de ciment, les matières combustibles étant introduites dans une chambre de combustion (6) et brûlées sous apport d'au moins un premier flux d'air (10.1), un deuxième flux d'air (11.1), au moins, étant introduit, sous la forme d'impulsions d'air comprimé, dans la zone de la sole (6.1) de la chambre de combustion de sorte que les déchets ou des matières combustibles résiduelles, qui se trouvent sur la sole, soient agités au moyen du deuxième flux d'air, **caractérisé en ce que** les matières combustibles (8.2), qui se trouvent sur la sole, sont soulevées par activation ciblée du deuxième flux d'air et entrent ainsi en contact actif avec le premier flux d'air (10.1), dans le but d'être incinérées.

2. Procédé selon la revendication 1, **caractérisé en ce qu'**au moins un premier flux partiel (10.1) du premier flux d'air est orienté essentiellement parallèlement au fond.

3. Procédé selon la revendication 1, **caractérisé en ce que** le premier flux d'air agit continuellement et le deuxième flux d'air (11.1) temporairement.

4. Procédé selon la revendication 1, **caractérisé en ce que** le deuxième flux d'air (11.1) est déclenché à des intervalles de temps réglables.

5. Procédé selon la revendication 1, **caractérisé en ce que** le fond présente un grand nombre de points d'entrée (11) pour le deuxième flux d'air, les points d'entrée étant activés simultanément ou par groupes.

6. Procédé selon la revendication 1, **caractérisé en ce que** la vitesse du premier flux d'air (10.1) et / ou la fréquence de l'activation du deuxième flux d'air (11.1) peuvent être réglées.

7. Procédé selon la revendication 1, **caractérisé en ce que** de la farine de ciment crue est chargée dans la chambre de combustion (6).

8. Procédé selon la revendication 1, **caractérisé en ce que** le premier et le deuxième flux d'air sont orientés de sorte qu'ils évoluent parallèlement l'un par rapport à l'autre ou se croisent de préférence.

9. Procédé selon la revendication 1, **caractérisé en ce que** le premier flux d'air est conduit, au moins en un premier flux d'air partiel (10.1), dans la zone inférieure de la chambre de combustion, et au moins en un deuxième flux partiel (10.2, 10.3) dans la zone supérieure de la chambre de combustion (6).

10. Procédé selon la revendication 1, **caractérisé en ce que** le premier flux d'air est conduit, au moins en un premier flux d'air partiel (10.1), dans la zone inférieure de la chambre de combustion, et au moins en un deuxième flux partiel (10.2, 10.3) dans la zone supérieure de la chambre de combustion, et que le premier flux partiel sépare les matières combustibles amenées en matières combustibles volantes et en matières combustibles non volantes, les matières combustibles volantes étant brûlées dans le premier flux partiel et évacuées hors de la chambre de combustion, tandis que les matières combustibles non volantes tombent sur la sole (6.1) et en sont soulevées par le deuxième flux d'air et mises en contact actif avec le deuxième flux partiel du premier flux d'air.

11. Dispositif pour l'exécution du procédé selon l'une ou plusieurs des revendications précédentes, avec une chambre de combustion (6), qui comprend un sole statique (6.1), des moyens (8) pour l'amenée des matières combustibles et des moyens (7.1) pour l'amenée d'au moins un premier flux d'air, **caractérisé en ce que**, dans la zone de la sole(6.1), sont prévus des moyens pour l'amenée d'au moins un deuxième flux d'air sous la forme d'impulsions d'air comprimé.

12. Dispositif selon la revendication 11, **caractérisé en ce que** les moyens pour l'amenée du deuxième flux d'air présentent un grand nombre de points d'entrée (11), qui sont répartis sur la sole (6.1).

13. Installation pour la fabrication de ciment avec un préchauffeur (1), un calcinateur (2) et un four tubulaire tournant (3), le calcinateur (2) comprenant un dispositif selon l'une des revendications 11 ou 12.
